# EUROPEAN PATENT APPLICATION

(11) **EP 4 810 932 A1**
(43) Date of publication of application: **23.09.2026**
(21) Application number: 26164384.5
(22) Date of filing: 12.03.2026
(51) Int. Cl.: G01M 3/36, B65B 57/02

(54) **SEAL INSPECTION APPARATUS**

(30) Priority: 18.03.2025 JP 2025043736
(71) Applicant: Ishida Co., Ltd., Kyoto-shi Kyoto 606-8392 (JP)
(72) Inventor: FUKUI, Chiaki, Ritto-shi, Shiga, 520-3026 (JP); TANIGAWA, Akihiro, Ritto-shi, Shiga, 520-3026 (JP)
(74) Representative: Betten & Resch

(57) **Abstract**

A seal inspection apparatus includes a contact portion that contacts the commodity transported by the transport conveyor, an elevating portion that changes a height position of the contact portion, a detecting portion 50 that detects a displacement amount of the height position of the contact portion when the commodity is in contact with the contact portion, an inspection portion 60 that inspects a seal state, and a control portion 70 that controls an elevating operation of the contact portion by the elevating portion and stops transport by the transport conveyor such that the commodity is positioned at an inspection position where contact by the contact portion is performed. The control portion 70 calculates a start timing for starting a lowering operation of the contact portion by the elevating portion, based on a stop timing for stopping the transport by the transport conveyor and a contact timing at which the contact portion contacts the commodity.

## Description

### TECHNICAL FIELD

One aspect of the present disclosure relates to a seal inspection apparatus.

### BACKGROUND

Conventionally, a seal inspection apparatus that inspects a seal state of a packaged commodity is known. For example, Japanese Unexamined Patent Publication No. 2006-160264 describes a packaging defect detection apparatus including a conveyor that transports a package, an air cylinder that is positioned above the package at a stop position of the conveyor and is provided with a pressing surface that presses the package, and a pressure sensor connected to the air cylinder. In this packaging defect detection apparatus, the pressing surface presses the upper surface of the package by the lowering of the air cylinder. Then, a defective package is detected based on a signal from the pressure sensor connected to the air cylinder.

### SUMMARY

In the above-described apparatus, during an inspection, the lowering operation of the air cylinder (contact portion) that contacts a commodity may be started after the transport by the conveyor is stopped. However, in this case, a time period from when the lowering operation of the contact portion is started until it contacts the commodity becomes a time period during which neither the transport of the commodity nor the inspection of the seal state is performed. From the viewpoint of suppressing a decrease in the production efficiency of the commodity, it is desirable to shorten such time period that is not related to actual production work.

In order to shorten the time period during which only the lowering operation of the contact portion is performed, it is necessary to start the lowering operation of the contact portion at an appropriate timing, but conventionally, a start timing of the lowering operation has been manually determined by an operator of the seal inspection apparatus. However, it is difficult for the operator to manually determine the appropriate timing, and variations may occur in the timing determined by the operator. Therefore, with the determination by the operator, there is a risk that the production efficiency of the commodity may decrease.

Therefore, an object of one aspect of the present disclosure is to provide a seal inspection apparatus that can suppress a decrease in the production efficiency of the commodity.
(1) A seal inspection apparatus according to one aspect of the present disclosure is a seal inspection apparatus that inspects a seal state of a packaged commodity, the seal inspection apparatus including: a transport conveyor that transports the commodity; a contact portion that is disposed above the transport conveyor and contacts the commodity transported by the transport conveyor; an elevating portion that changes a height position of the contact portion; a detecting portion that detects a displacement amount of the height position of the contact portion when the commodity is in contact with the contact portion; an inspection portion that inspects the seal state by comparing the displacement amount detected by the detecting portion with a predetermined threshold value; and a control portion that controls an elevating operation of the contact portion by the elevating portion and stops transport by the transport conveyor such that the commodity is positioned at an inspection position where contact by the contact portion is performed, wherein the control portion calculates a start timing for starting a lowering operation of the contact portion by the elevating portion, based on a stop timing for stopping the transport by the transport conveyor and a contact timing at which the contact portion contacts the commodity.
   **In** the seal inspection apparatus with this configuration, the start timing for starting the lowering operation of the contact portion is calculated based on the stop timing for stopping the transport by the transport conveyor and the contact timing at which the contact portion contacts the commodity. **In** this way, by considering both the stop timing and the contact timing, some timing during the transport of the commodity by the transport conveyor is calculated as the start timing. That is, according to such the start timing, it becomes possible to shorten the time period during which neither the transport of the commodity nor the inspection of the seal state is performed. As a result, a decrease in the production efficiency of the commodity can be suppressed.
(2) **In** the seal inspection apparatus according to (1) above, the control portion may acquire an actual measured value of a time period from when the contact portion starts to lower until it contacts the commodity positioned at the inspection position, and calculate the start timing based on the stop timing and the acquired actual measured value. **In** this configuration, the start timing is calculated based on the stop timing and the actual measured value of the time period from when the contact portion starts to lower until it contacts the commodity positioned at the inspection position. By using such the actual measured value, the start timing can be calculated accurately.
(3) In the seal inspection apparatus according to (1) above, the control portion may calculate a start timing at which the stop timing and the contact timing substantially coincide, based on the height of the commodity. In this configuration, by using the height of the transported commodity, the start timing at which the stop timing and the contact timing substantially coincide can be easily calculated.
(4) In the seal inspection apparatus according to any one of (1) to (3) above, the control portion may control the lowering operation of the contact portion by the elevating portion based on the calculated start timing. The start timing calculated based on the stop timing and the contact timing is some timing during the transport of the commodity by the transport conveyor. By controlling the lowering operation of the contact portion based on such the start timing, the time period during which neither the transport of the commodity nor the inspection of the seal state is performed is shortened. As a result, the decrease in the production efficiency of the commodity can be reliably suppressed.
(5) The seal inspection apparatus according to any one of (1) to (4) above may further include an input portion that accepts a change of the start timing. In this configuration, the operator can perform an adjustment of the start timing in consideration of minute differences and the like found through actual operation of the seal inspection apparatus. Therefore, it becomes possible to further shorten the time period during which neither the transport of the commodity nor the inspection of the seal state is performed. As a result, the decrease in the production efficiency of the commodity can be further suppressed.
(6) In the seal inspection apparatus according to any one of (1) to (5) above, the control portion may execute a calculation mode that is different from an inspection mode for inspecting the seal state and that calculates the start timing, and in the calculation mode, the control portion may acquire the stop timing and the contact timing, and calculate the start timing based on the stop timing and the contact timing acquired in the calculation mode. In this configuration, the acquisition of the stop timing and the contact timing, and the calculation of the start timing are performed in the calculation mode, which is different from the inspection mode for inspecting the seal state. In this way, by calculating the start timing in the calculation mode, the inspection using the appropriate start timing can be performed throughout the inspection mode. Therefore, the decrease in the production efficiency of the commodity can be further suppressed.
(7) In the seal inspection apparatus according to any one of (1) to (6) above, the control portion may acquire a height position of the contact portion at an end time point when the inspection ends, and change a time period from when a raising operation of the contact portion by the elevating portion is started until transport by the transport conveyor is resumed, based on the acquired height position at the end time point. In this configuration, the transport by the transport conveyor can be prevented from being resumed while the contact portion is being raised. As a result, the transport of the commodity can be performed appropriately.
(8) The seal inspection apparatus according to any one of (1) to (7) above may further include a detection portion that detects the commodity transported by the transport conveyor, and the detection portion may be disposed on an upstream side of the inspection position in a transport direction of the transport conveyor. In this configuration, the control of the elevating operation of the contact portion by the control portion and the stop of the transport by the transport conveyor can be easily performed.
(9) In the seal inspection apparatus according to any one of (1) to (8) above, the control portion may calculate the start timing based on a first time period including the stop timing and a second time period including the contact timing, the first time period may be a time period from when the commodity is detected by a detection portion that detects the commodity transported by the transport conveyor until the transport by the transport conveyor is stopped, and the second time period may be a time period from when the contact portion starts to lower until it contacts the commodity positioned at the inspection position. In this configuration, the start timing can be easily calculated.

According to one aspect of the present disclosure, the decrease in the production efficiency of the commodity can be suppressed.

### BRIEF DESCRIPTION OF THE DRAWINGS

FIG. 1 is a side view of a seal inspection apparatus according to an embodiment.
FIG. 2 is a schematic diagram of a packaged commodity to be inspected.
FIG. 3 is an enlarged perspective view of a main part of the seal inspection apparatus according to the present embodiment.
FIG. 4 is a block diagram illustrating a functional configuration of the seal inspection apparatus according to the present embodiment.
FIG. 5 is a flowchart illustrating an operation of the seal inspection apparatus according to the present embodiment.
FIG. 6 is a diagram schematically illustrating an operation of the contact portion during the inspection of the seal state.
FIG. 7 is a diagram illustrating an example of a change in the height position of the contact portion.
FIG. 8 is a diagram illustrating an example of a screen for changing the start timing.
FIG. 9 is a diagram illustrating a relationship among a detection timing, a stop timing, a contact timing, and a start timing.

### DETAILED DESCRIPTION

Hereinafter, a seal inspection apparatus 1 according to an embodiment will be described with reference to the drawings. In the description of the drawings, the same elements are denoted by the same reference numerals, and redundant description is omitted. In addition, "A or B" in this specification may include either one of A and B, and does not exclude including both A and B.

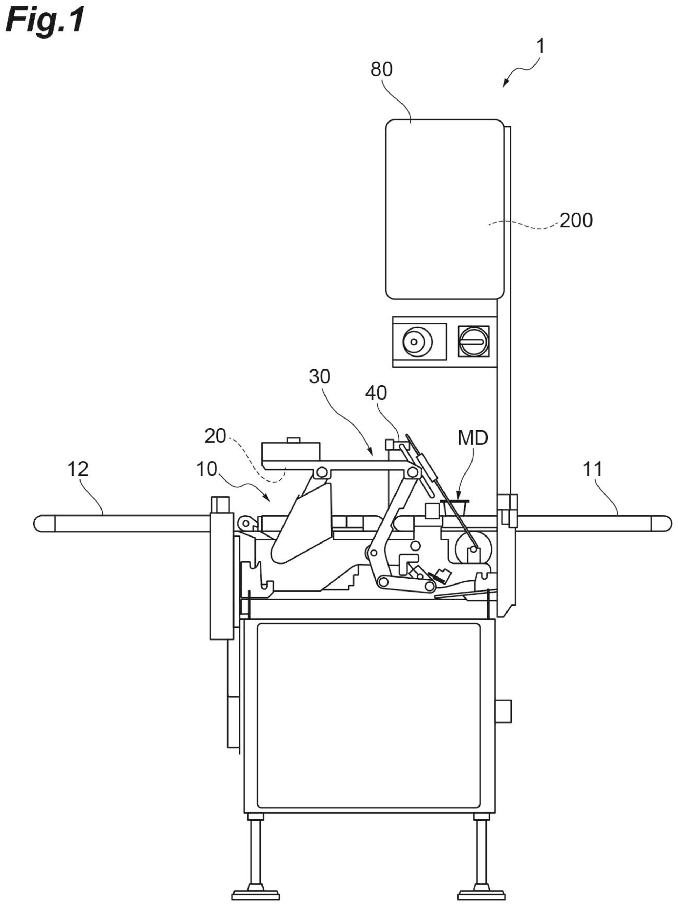

First, an overview of the seal inspection apparatus 1 will be described with reference to FIG. 1. The seal inspection apparatus 1 is an apparatus that inspects a seal state of a packaged commodity MD. The commodity MD packaged by a sealing apparatus (not illustrated) is carried into the seal inspection apparatus 1 by an infeed conveyor 11. The commodity MD whose seal state has been inspected by the seal inspection apparatus 1 is carried out from the seal inspection apparatus 1 by an outfeed conveyor 12.

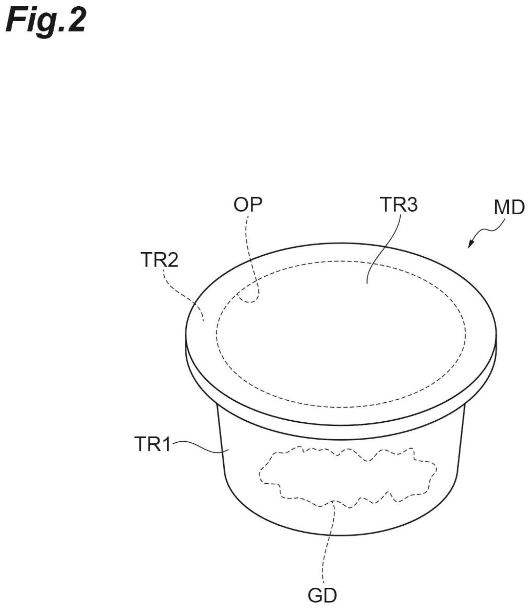

Next, a configuration of the commodity MD to be inspected will be described with reference to FIG. 2. In one example, in the commodity MD, an upper opening OP is sealed by a film TR3. The opening OP is an opening surrounded by an annular edge TR2 at the upper end of the commodity MD. In this example, the sealing by the film TR3 is a heat seal performed on the edge TR2 with a content GD housed in a main body TR1. Examples of the content GD include processed foods that are liquid or that contain moisture.

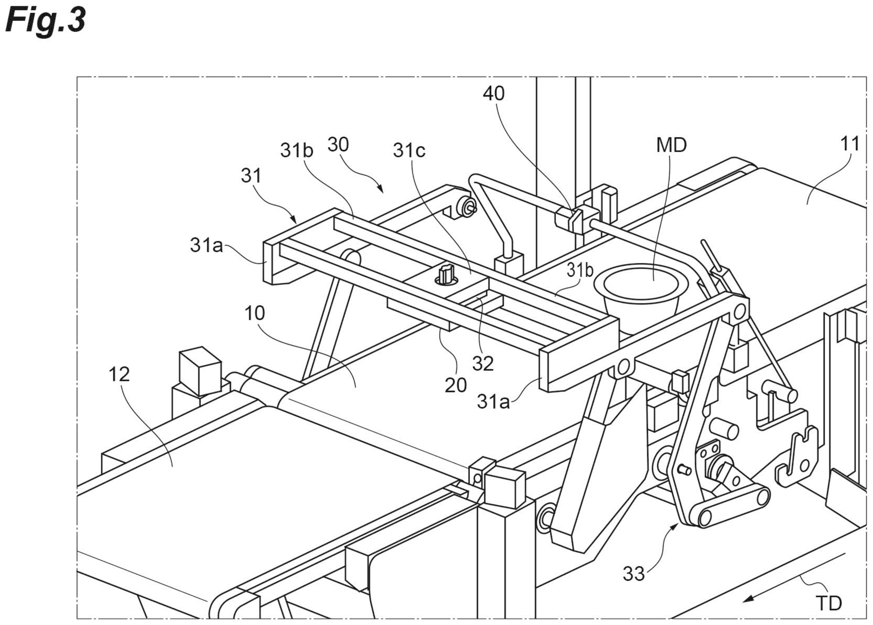

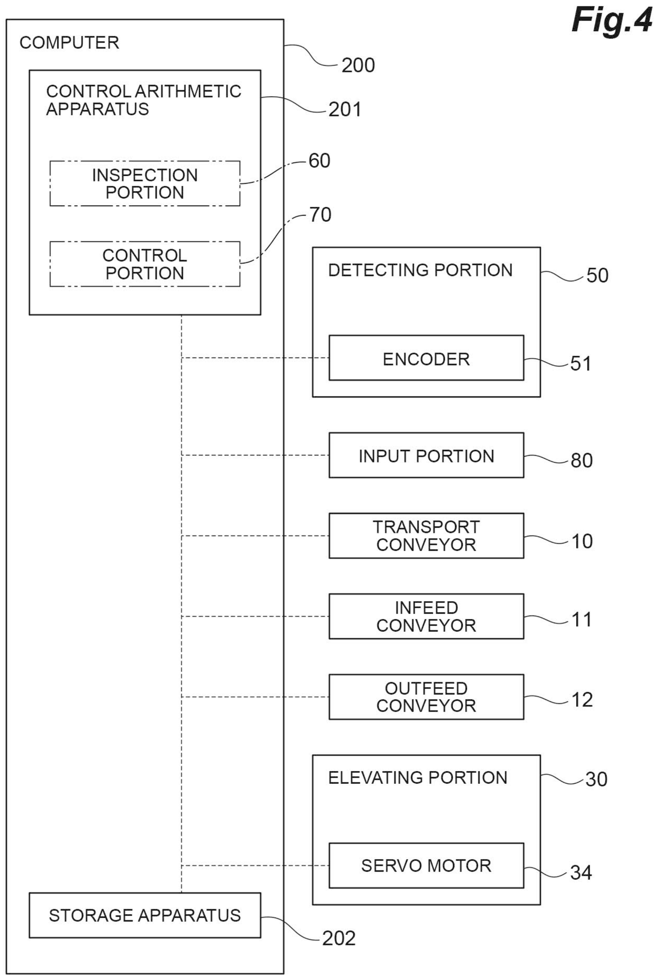

Next, the configuration of the seal inspection apparatus 1 will be described with reference to FIGS. 3 and 4. As illustrated in FIGS. 3 and 4, the seal inspection apparatus 1 includes a transport conveyor 10, a contact portion 20, an elevating portion 30, a detection portion 40, a detecting portion 50, an inspection portion 60, a control portion 70, and an input portion 80.

The transport conveyor 10 is a conveyor that transports the commodity MD. In the inspection by the seal inspection apparatus 1, the commodity MD is transported from the infeed conveyor 11 to the transport conveyor 10, and the inspection of the seal state of the commodity MD is performed on the transport conveyor 10. The commodity MD on which the inspection of the seal state has been performed is transported from the transport conveyor 10 to the outfeed conveyor 12, and is carried out from the seal inspection apparatus 1 by the outfeed conveyor 12. That is, the transport conveyor 10 is also a conveyor on which the inspection of the seal state of the commodity MD is performed. In one example, the seal inspection apparatus 1 includes the infeed conveyor 11 and the outfeed conveyor 12, and in the transport direction TD of the transport conveyor 10, the infeed conveyor 11, the transport conveyor 10, and the outfeed conveyor 12 are arranged in series in order from the sealing apparatus side. Here, the transport direction TD is a direction in which the transport conveyor 10 transports the commodity MD, the infeed conveyor 11 is on an upstream side, and the outfeed conveyor 12 is on a downstream side.

The contact portion 20 is a portion that contacts the commodity MD transported by the transport conveyor 10. In one example, the contact portion 20 contacts the film TR3 of the commodity MD and applies pressure from above. The contact portion 20 may be made of resin or may be made of rubber.

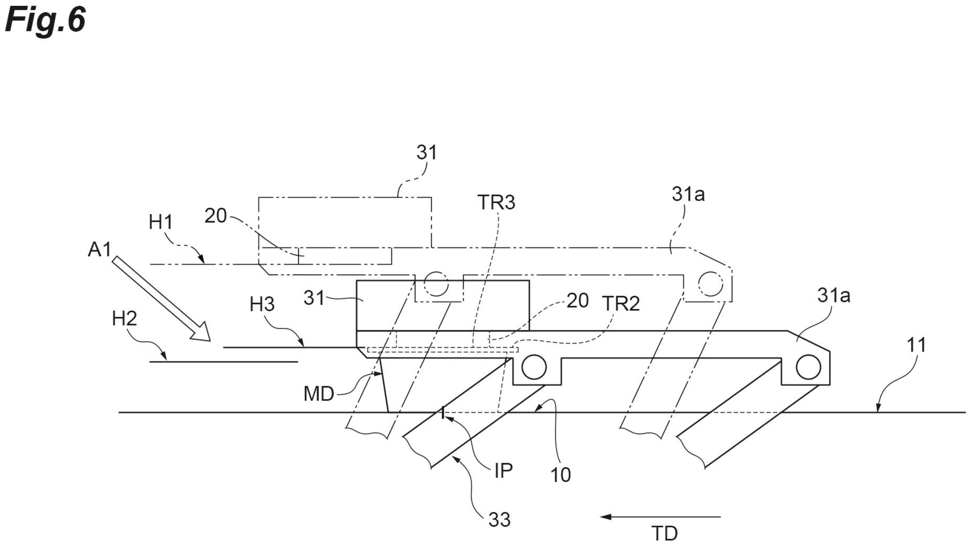

As illustrated in FIG. 3, the contact portion 20 is disposed above the transport conveyor 10. The contact portion 20 contacts the commodity MD transported by the transport conveyor 10 from above. The portion of the commodity MD that the contact portion 20 contacts is a portion of the film TR3 that does not overlap with the edge TR2 in a top view, and is, for example, near the center of the film TR3. In the following description, a position where the contact by the contact portion 20 is performed may be referred to as an inspection position IP (see FIG. 6).

The elevating portion 30 is a portion that changes the height position of the contact portion 20. The elevating portion 30 includes a support 31, a fixing member 32, a horizontal link 33, and a servo motor 34. The support 31 is a portion to which the contact portion 20 is fixed. The fixing member 32 is a portion that fixes the contact portion 20 to the support 31. The horizontal link 33 is a portion for changing the height position of the support 31 while maintaining a horizontal state of the contact portion 20. The servo motor 34 is a portion that moves a lever at a lower part of the horizontal link 33. The contact portion 20 and the fixing member 32 are removably attached to the support 31.

The support 31 is fixed to an upper part of the horizontal link 33 and extends in a direction orthogonal to the transport direction TD. The support 31 includes both end portions 31a, 31a fixed to the horizontal link 33, a connecting portion 31b that connects the both end portions 31a, 31a, and a support portion 31c fixed to a central portion in a longitudinal direction of the connecting portion 31b.

The detection portion 40 is a portion that detects the commodity MD transported by the transport conveyor 10. As illustrated in FIG. 3, the detection portion 40 is disposed on the upstream side of the inspection position IP in the transport direction TD. The detection portion 40 is disposed near a boundary between the infeed conveyor 11 and the transport conveyor 10. The detection portion 40 is a transmissive photoelectric sensor.

The detecting portion 50 is a portion that detects the displacement amount of the height position of the contact portion 20 when the commodity MD is in contact with the contact portion 20. As illustrated in FIG. 4, the detecting portion 50 includes an encoder 51. The encoder 51 outputs a rotation amount of a rotation shaft of the servo motor 34. An output of the encoder 51 is read by a computer 200, which will be described later, and is treated as the displacement amount of the height position of the contact portion 20.

The inspection portion 60 is a portion that inspects the seal state of the commodity MD. The inspection portion 60 inspects the seal state of the commodity MD by comparing the displacement amount of the height position of the contact portion 20 detected by the detecting portion 50 with a predetermined threshold value. The inspection portion 60 inspects, for example, the seal state of the film TR3 by comparing the displacement amount with the threshold value.

The control portion 70 is a portion that controls the elevating portion 30 and the transport conveyor 10. The control portion 70 controls an elevating operation of the contact portion 20 by the elevating portion 30. Furthermore, the control portion 70 controls the stop and resumption of the transport by the transport conveyor 10. In one example, the control portion 70 is also a portion that controls the infeed conveyor 11 and the outfeed conveyor 12.

The inspection portion 60 and the control portion 70 are realized by the computer 200. The inspection portion 60 and the control portion 70 are functional units within a program executed by the computer 200. The computer 200 includes a control arithmetic apparatus 201 and a storage apparatus 202. A processor such as a CPU or a GPU can be used for the control arithmetic apparatus 201. The control arithmetic apparatus 201 reads a program stored in the storage apparatus 202 and performs predetermined arithmetic processing according to the program. Furthermore, the control arithmetic apparatus 201 can write an arithmetic result to the storage apparatus 202 and read information stored in the storage apparatus 202, according to the program.

The input portion 80 is a portion that accepts an input from an operator of the seal inspection apparatus 1. In one example, an information regarding the commodity MD to be inspected is input to the input portion 80. The information regarding the commodity MD includes, for example, the height of the commodity MD. The input portion 80 is configured to include a touch panel. In this example, the input portion 80 also functions as a display unit for displaying various data related to the inspection of the seal state to the operator.

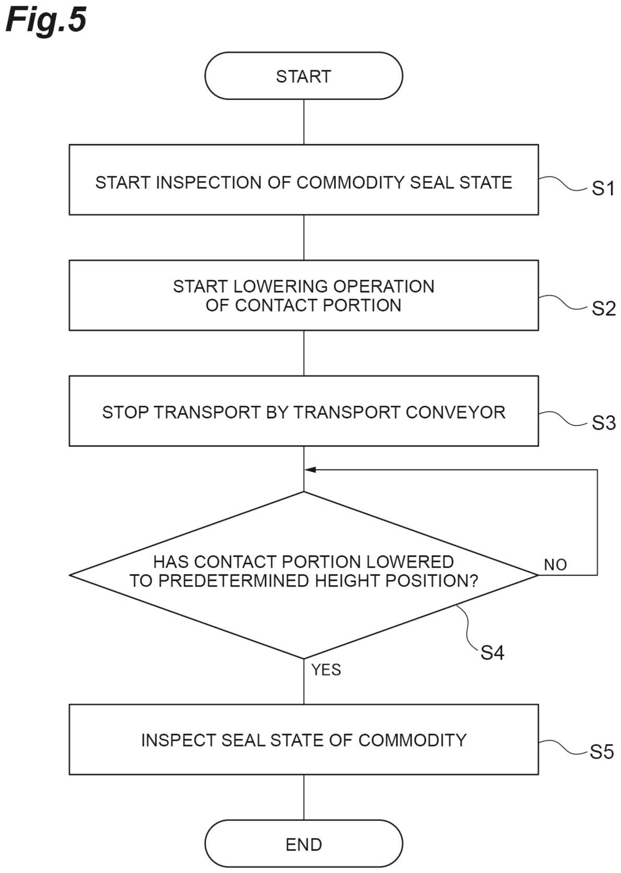

Next, the operation of the seal inspection apparatus 1 will be described with reference to FIGS. 5 and 6. As illustrated in FIG. 5, the control portion 70 starts the inspection of the seal state of the commodity MD based on a detection result of the detection portion 40 (Step S1). The inspection is started, for example, at a detection timing when the commodity MD is detected by the detection portion 40. As described above, the detection portion 40 is disposed near the boundary between the infeed conveyor 11 and the transport conveyor 10, and the detection timing is, for example, a timing at which the commodity MD is carried from the infeed conveyor 11 to the transport conveyor 10.

Next, the control portion 70 transmits an operation instruction to the elevating portion 30. Thereby, the lowering operation of the contact portion 20 by the elevating portion 30 is started (Step S2). As illustrated in FIG. 6, the elevating portion 30 lowers the contact portion 20 from a height position H1 toward a height position H2. The lowering operation of the contact portion 20 is performed by the control portion 70 changing a force (torque) applied from the servo motor 34 to the contact portion 20. Here, the height position H1 is a standby position of the contact portion 20, and is a position higher than the height position of the edge TR2 of the commodity MD transported by the transport conveyor 10. The height position H2 is a position lower than the height position H1, and is a position lower than the height position of the edge TR2.

A downward force due to gravity proportional to its own mass and the like and an upward force by the servo motor 34 act on the contact portion 20, and when the upward force becomes smaller than the downward force, the contact portion 20 lowers. That is, the upward force from the servo motor 34 that cancels the gravity of the contact portion 20, the horizontal link 33, the support 31, and the like acts on the contact portion 20 that is stationary at the height position H1. By weakening the force (torque) from the servo motor 34, the contact portion 20 lowers. Due to the action of the horizontal link 33, the contact portion 20 moves in a direction indicated by an arrow A1 in FIG. 6, that is, diagonally downward.

Furthermore, the control portion 70 transmits a stop instruction to the transport conveyor 10. Thereby, the transport of the commodity MD by the transport conveyor 10 is stopped (Step S3). By such the stop of the transport, the commodity MD is positioned at the inspection position IP. The control portion 70 stops the transport by the transport conveyor 10 such that the commodity MD is positioned at the inspection position IP, based on the detection result by the detection portion 40.

A stop timing for stopping the transport of the commodity MD by the transport conveyor 10 is a timing after a predetermined time period has elapsed from the detection timing at which the commodity MD was detected by the detection portion 40. In one example, the stop timing is defined as a timing in a time series with the detection timing as a temporal starting point. Such the stop timing is predetermined by the operator at the start of the inspection of the seal state, and is stored in the storage apparatus 202 in the form of an elapsed time from the detection timing.

Next, the control portion 70 determines whether or not the contact portion 20 has lowered to a predetermined height position (Step S4). The control portion 70 determines whether or not the contact portion 20 has lowered to a height position H3. The height position H3 is a position between the height position H1 and the height position H2, and is the height position of the edge TR2 of the commodity MD. That is, in Step S4, the control portion 70 determines whether or not the contact portion 20 has lowered to a height position where it contacts the film TR3 of the commodity MD. If the contact portion 20 has not lowered to the predetermined height position (Step S4: NO), the lowering operation of the contact portion 20 is continuously executed.

If the contact portion 20 has lowered to the predetermined height position (Step S4: YES), the inspection of the seal state of the commodity MD is performed by the inspection portion 60 (Step S5). The inspection portion 60 inspects the seal state by comparing the displacement amount of the contact portion 20 detected by the detecting portion 50 with the predetermined threshold value. If the displacement amount of the contact portion 20 is less than the threshold value, the inspection portion 60 determines that the seal state of the commodity MD is good. If the displacement amount of the contact portion 20 is equal to or greater than the threshold value, the inspection portion 60 determines that the seal state of the commodity MD is defective. After the inspection of the seal state, the raising operation of the contact portion 20 by the elevating portion 30 is started, and then the transport by the transport conveyor 10 is resumed.

In the series of operations related to the inspection of the seal state described above, the control portion 70 calculates the height position of the contact portion 20 at any time based on the output from the encoder 51 of the detecting portion 50. The control portion 70 calculates a change in the height position of the contact portion 20 in the inspection of the seal state, based on the output from the encoder 51. Such the change in the height position of the contact portion 20 is calculated for each inspection and is stored in the storage apparatus 202 of the computer 200 after the inspection is completed. In one example, the change in the height position of the contact portion 20 is defined as a change in a time series with the detection timing as a temporal starting point. That is, the stop timing and the change in the height position of the contact portion 20 are handled in the same time series with the detection timing as the temporal starting point.

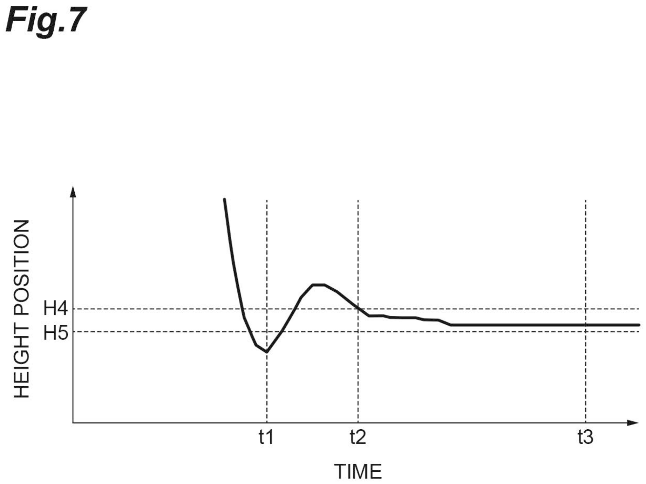

FIG. 7 illustrates an example of a change in the height position of the contact portion 20 in the inspection of the seal state. In FIG. 7, a vertical axis indicates the height position of the contact portion 20, and a horizontal axis indicates time. As described above, since the change in the height position of the contact portion 20 is defined as a change in the time series with the detection timing as the temporal starting point, the time illustrated in FIG. 7 is shown as an elapsed time from the detection timing.

In FIG. 7, a time point t1 indicates a time point when the contact portion 20 contacted the commodity MD, and the lowering operation of the contact portion 20 by the elevating portion 30 is performed from its start time point to the time point t1. A time point t2 indicates a time point when the inspection of the seal state was started, and a time point t3 indicates a time point when the inspection ended.

As illustrated in FIG. 7, the height position of the contact portion 20 becomes the lowest position at the time point t1, and then the height position of the contact portion 20 once becomes higher. This is due to an impact caused by the contact between the contact portion 20 and the commodity MD. Furthermore, after the time point t2, the height position of the contact portion 20 gradually lowers from a height position H4 at the time point t2, and then stabilizes at a certain height position. In this way, with respect to the change in the height position of the contact portion 20, the contact portion 20 and the commodity MD come into contact, and after a certain amount of time period has elapsed, the height position of the contact portion 20 stabilizes.

In one example, the inspection time period of the seal state is set to include a time period during which the height position of the contact portion 20 is stable. Such an inspection time period is, for example, a time period set based on an operator's experience. In the example illustrated in FIG. 7, the inspection of the seal state is performed by comparing a displacement amount from the height position H4 at the time point t2 with the threshold value. In FIG. 7, a value obtained by subtracting the threshold value from the height position H4 is illustrated as a height position H5, and if the height position of the contact portion 20 becomes equal to or lower than the height position H5 between the time point t2 and the time point t3, it is determined that the seal state is defective.

In the operation of the seal inspection apparatus 1 described above, if neither the transport of the commodity MD nor the inspection of the seal state is performed during the period from the start time point of the lowering operation of the contact portion 20 by the elevating portion 30 to the time point t1, the time period during that period becomes a time period not related to actual production work. From the viewpoint of suppressing a decrease in the production efficiency of the commodity MD, it is desirable to shorten such time period that is not related to actual production work. In order to shorten the time period during which only the lowering operation of the contact portion 20 is performed, it is necessary to start the lowering operation of the contact portion 20 at an appropriate timing. However, since it takes a certain amount of time period for the change in the height position to stabilize after the contact portion 20 contacts the commodity MD, it is difficult for the operator to determine an appropriate timing in consideration of such time period. Furthermore, when the operator determines the timing, variations may occur in the timing.

In view of such the problem, in the seal inspection apparatus 1 of the present embodiment, the control portion 70 calculates a start timing for starting the lowering operation of the contact portion 20 by the elevating portion 30, and controls the lowering operation of the contact portion 20 by the elevating portion 30 based on the calculated start timing.

Specifically, the control portion 70 calculates the start timing based on a stop timing for stopping the transport by the transport conveyor 10 and a contact timing at which the contact portion 20 contacts the commodity MD. In one example, the control portion 70 calculates the start timing based on the stop timing and an actual measured value of a time period from when the contact portion 20 starts to lower until it contacts the commodity MD positioned at the inspection position IP.

In this example, the control portion 70 first acquires the actual measured value. The control portion 70 acquires the actual measured value based on the change in the height position of the contact portion 20 stored in the storage apparatus 202. The change in the height position of the contact portion 20 stored in the storage apparatus 202 is a change calculated based on the output of the encoder 51 as described above in an inspection that has already been performed. As described above, the height position of the contact portion 20 becomes the lowest position at the contact timing when the contact portion 20 contacts the commodity MD, and then the height position of the contact portion 20 once becomes higher. That is, the contact timing can be said to be a timing at which a differential value in the change of the height position of the contact portion 20 changes from a negative value to a positive value. Therefore, the control portion 70 performs a differentiation process on the change in the height position of the contact portion 20 to calculate the differential value at each time point, and acquires the timing at which the calculated differential value at each time point changes from a negative value to a positive value as the contact timing.

Next, the control portion 70 specifies a timing at which the contact portion 20 started to lower in the change of the height position. This timing is an actual timing at which the lowering of the contact portion 20 was started in a past inspection that showed the change in the height position, and is a timing set by the operator or the like in the past inspection. Next, the control portion 70 calculates a time period from the specified timing to the calculated contact timing as an actual measured value of the time period from when the contact portion 20 starts to lower until it contacts the commodity MD. Next, the control portion 70 calculates, as the start timing, a timing that precedes the stop timing by an amount of time equal to the calculated actual measured value. In one example, the calculated start timing may be a timing at which the stop timing and the contact timing substantially coincide. Here, "substantially coincide" indicates that a difference between the stop timing and the contact timing is within 30 milliseconds.

The control portion 70 may display the calculated start timing on the input portion 80 to present the start timing to the operator. At this time, the control portion 70 displays the calculated start timing on the input portion 80, for example, as an elapsed time from the detection timing.

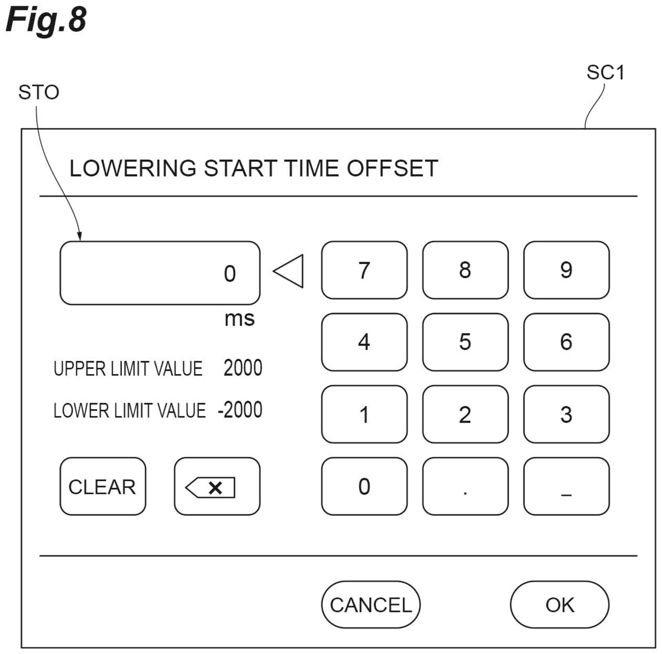

The operator may change the start timing with respect to the input portion 80 after referring to the start timing displayed on the input portion 80. That is, the input portion 80 may accept a change of the start timing. In the example illustrated in FIG. 8, an offset amount STO for the start timing is input by the operator on a change screen SC1. The control portion 70 changes the start timing by offsetting the start timing by the offset amount STO. Such the change of the start timing can be performed, for example, to adjust minute differences and the like found through actual operation of the seal inspection apparatus 1.

Furthermore, the control portion 70 may change a time period from when a raising operation of the contact portion 20 by the elevating portion 30 is started until transport by the transport conveyor 10 is started, and control the raising operation of the contact portion 20 by the elevating portion 30 based on the changed time period. In one example, the control portion 70 changes the time period from when the raising operation of the contact portion 20 by the elevating portion 30 is started until the transport by the transport conveyor 10 is started, based on the height position of the contact portion 20 at an end time point when the inspection of the seal state ends.

In this example, the control portion 70 first acquires the height position of the contact portion 20 at the end time point when the inspection of the seal state ends. Next, the control portion 70 calculates a time period required to rise from the acquired height position of the contact portion 20 to the height position H1, which is a standby position before the inspection. The control portion 70 calculates the time period by dividing a distance between the acquired height position of the contact portion 20 and the height position H1 by a raising speed of the contact portion 20. Next, the control portion 70 changes the time period from when the raising operation of the contact portion 20 by the elevating portion 30 is started until the transport by the transport conveyor 10 is started to the calculated time period.

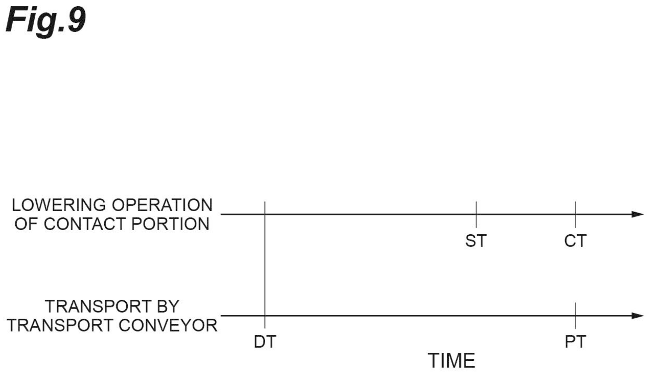

The actions and effects of the seal inspection apparatus 1 will be described with reference to FIG. 9. In FIG. 9, a detection timing is illustrated as a detection timing DT, a start timing is illustrated as a start timing ST, a contact timing is illustrated as a contact timing CT, and a stop timing is illustrated as a stop timing PT. Here, it should be noted that although the detection timing DT is a timing related to the detection portion 40, it is illustrated together with the start timing ST, the contact timing CT, and the stop timing PT for convenience of explanation.

In the seal inspection apparatus 1, the start timing ST is calculated based on the stop timing PT and the contact timing CT. In this case, as illustrated in FIG. 9, the start timing ST is a timing between the detection timing DT and the stop timing PT. In this way, by considering both the stop timing PT and the contact timing CT, some timing during the transport of the commodity MD by the transport conveyor 10 is calculated as the start timing ST. That is, according to the start timing ST, it becomes possible to shorten the time period during which neither the transport of the commodity MD nor the inspection of the seal state is performed. As a result, a decrease in the production efficiency of the commodity MD can be suppressed.

In the seal inspection apparatus 1, the start timing ST is calculated based on the stop timing PT and the actual measured value of a time period from when the contact portion 20 starts to lower until it contacts the commodity MD positioned at the inspection position IP. By using such the actual measured value, the start timing ST can be calculated accurately.

In the seal inspection apparatus 1, the control portion 70 controls the lowering operation of the contact portion 20 by the elevating portion 30 based on the calculated start timing ST. As described above, the start timing ST is some timing during the transport of the commodity MD by the transport conveyor 10. Therefore, by controlling the lowering operation of the contact portion 20 based on the start timing ST, the time period during which neither the transport of the commodity MD nor the inspection of the seal state is performed is shortened. As a result, the decrease in the production efficiency of the commodity MD can be reliably suppressed.

The seal inspection apparatus 1 includes the input portion 80 that accepts a change of the start timing ST. In this case, the operator can perform an adjustment of the start timing ST in consideration of minute differences and the like found through actual operation of the seal inspection apparatus 1. For this reason, it becomes possible to further shorten the time period during which neither the transport of the commodity MD nor the inspection of the seal state is performed. As a result, the decrease in the production efficiency of the commodity MD can be further suppressed.

In the seal inspection apparatus 1, the control portion 70 acquires the height position of the contact portion 20 at the end time point when the inspection ends and, based on the height position, changes the time period from when the raising operation of the contact portion 20 by the elevating portion 30 is started until the transport by the transport conveyor 10 is resumed. This can prevent the transport by the transport conveyor 10 from being resumed while the contact portion 20 is being raised. As a result, the transport of the commodity MD can be performed appropriately.

Although one embodiment has been described above, one aspect of the present disclosure is not limited to the above-described embodiment. Various changes can be made without departing from the spirit of the present disclosure.

In the above-described embodiment, the start timing was calculated based on the stop timing and the actual measured value of the time period from when the contact portion 20 starts to lower until it contacts the commodity MD positioned at the inspection position IP, but the calculation process of the start timing is not limited to the above-described process. In one example, the control portion 70 may calculate a start timing at which the stop timing and the contact timing substantially coincide, based on the height of the commodity MD. In this example, the control portion 70 first acquires the height of the commodity MD. The control portion 70 acquires the height of the commodity MD by accepting the height of the commodity MD input by a user. Next, the control portion 70 calculates a time period required for the contact portion 20 to lower from the height position H1 to the height of the commodity MD. The control portion 70 calculates the time period by dividing a distance between the height position H1 and the height of the commodity MD by a lowering speed of the contact portion 20. Next, the control portion 70 calculates, as the start timing, a timing that precedes the stop timing by the calculated time period required for lowering. Thereby, a start timing at which the stop timing and the contact timing substantially coincide is calculated. In this way, by using the height of the transported commodity MD, the start timing at which the stop timing and the contact timing substantially coincide can be easily calculated.

In the above-described embodiment, the start timing was calculated based on predetermined time points in a time series with the detection timing as a temporal starting point, which are the stop timing and the contact timing. The start timing may be calculated, for example, based on a period having a predetermined time width in the time series. In another example, the control portion 70 may calculate the start timing based on a first time period including the stop timing and a second time period including the contact timing. Here, the first time period is a time period from when the commodity MD is detected by the detection portion 40 until the transport by the transport conveyor 10 is stopped, and the second time period is a time period from when the contact portion 20 starts to lower until it contacts the commodity MD positioned at the inspection position IP. In this example, the control portion 70 acquires the first time period based on the stop timing stored in the storage apparatus 202. As described above, the stop timing is stored in the storage apparatus 202 in the form of an elapsed time from the detection timing, and the control portion 70 acquires the elapsed time as the first time period. In addition, the control portion 70 acquires the second time period based on the change in the height position of the contact portion 20 stored in the storage apparatus 202. The control portion 70 acquires, as the second time period, an actual measured value of the time period from when the contact portion 20 starts to lower until it contacts the commodity MD positioned at the inspection position IP. Note that the actual measured value can be acquired through the same process as in the above-described embodiment. Then, the control portion 70 calculates a difference between the acquired first time period and second time period, and calculates, as the start timing, a timing that is after the detecting timing by the calculated difference. In this way, by being based on the first time period and the second time period, the start timing can be easily calculated.

In each calculation process of the start timing described above, the start timing may be calculated based on the stop timing and the contact timing acquired in a calculation mode. That is, the control portion 70 may execute the calculation mode and acquire the stop timing and the contact timing in the calculation mode. The calculation mode is a mode different from an inspection mode for inspecting the seal state of the commodity MD. In the calculation mode, a process similar to the process illustrated in FIG. 5 is performed, and the stop timing and the contact timing are acquired in the process. In one example, the stop timing in the calculation mode is acquired by the input portion 80 accepting an input from an operator. The contact timing in the calculation mode is acquired based on a change in the height position of the contact portion 20 in the calculation mode. Here, the contact timing in the calculation mode is acquired through a process similar to the process in Step S3 of the above-described embodiment. In this way, by calculating the start timing in the calculation mode, the inspection using the appropriate start timing can be performed throughout the inspection mode. Therefore, the decrease in the production efficiency of the commodity can be further suppressed.

In the above-described embodiment, the commodity MD to which a top seal is applied has been described as an example of a commodity whose seal state is inspected by the seal inspection apparatus 1, but the position where the seal is applied is not limited to the upper part of the commodity. For example, the inspection of the seal state by the seal inspection apparatus 1 may be performed on a commodity to which a seal is applied to a side part of the commodity.

In the above-described embodiment, the seal checking apparatus 1 may not include the detection portion 40 and the input portion 80. In this case, the detection portion 40 and the input portion 80 may be constituent elements of another apparatus different from the seal inspection apparatus 1.

## Claims

1. A seal inspection apparatus that inspects a seal state of a packaged commodity, the seal inspection apparatus comprising:
a transport conveyor that transports the commodity;
a contact portion that is disposed above the transport conveyor and contacts the commodity transported by the transport conveyor;
an elevating portion that changes a height position of the contact portion;
a detecting portion that detects a displacement amount of the height position of the contact portion when the commodity is in contact with the contact portion;
an inspection portion that inspects the seal state by comparing the displacement amount detected by the detecting portion with a predetermined threshold value; and
a control portion that controls an elevating operation of the contact portion by the elevating portion and stops transport by the transport conveyor such that the commodity is positioned at an inspection position where contact by the contact portion is performed,
wherein the control portion calculates a start timing for starting a lowering operation of the contact portion by the elevating portion, based on a stop timing for stopping the transport by the transport conveyor and a contact timing at which the contact portion contacts the commodity.

2. The seal inspection apparatus according to claim 1, wherein the control portion:
acquires an actual measured value of a time period from when the contact portion starts to lower until the contact portion contacts the commodity positioned at the inspection position; and
calculates the start timing based on the stop timing and the acquired actual measured value.

3. The seal inspection apparatus according to claim 1, wherein the control portion calculates the start timing at which the stop timing and the contact timing substantially coincide, based on a height of the commodity.

4. The seal inspection apparatus according to any one of claims 1 to 3, wherein the control portion controls the lowering operation of the contact portion by the elevating portion based on the calculated start timing.

5. The seal inspection apparatus according to any one of claims 1 to 4, further comprising an input portion that accepts a change of the start timing.

6. The seal inspection apparatus according to any one of claims 1 to 5, wherein the control portion executes a calculation mode that is different from an inspection mode for inspecting the seal state and that calculates the start timing, and
in the calculation mode, the control portion:
acquires the stop timing and the contact timing; and
calculates the start timing based on the stop timing and the contact timing acquired in the calculation mode.

7. The seal inspection apparatus according to any one of claims 1 to 6, wherein the control portion:
acquires a height position of the contact portion at an end time point when the inspection ends; and
changes a time period from when a raising operation of the contact portion by the elevating portion is started until transport by the transport conveyor is resumed, based on the acquired height position at the end time point.

8. The seal inspection apparatus according to any one of claims 1 to 7, further comprising a detection portion that detects the commodity transported by the transport conveyor,
wherein the detection portion is disposed on an upstream side of the inspection position in a transport direction of the transport conveyor.

9. The seal inspection apparatus according to any one of claims 1 to 8, wherein the control portion calculates the start timing based on a first time period including the stop timing and a second time period including the contact timing,
wherein the first time period is a time period from when the commodity is detected by a detection portion that detects the commodity transported by the transport conveyor until the transport by the transport conveyor is stopped, and
wherein the second time period is a time period from when the contact portion starts to lower until the contact portion contacts the commodity positioned at the inspection position.
